# EUROPÄISCHE PATENTANMELDUNG

(11) **EP 0 938 178 A2**
(43) Veröffentlichungstag der Anmeldung: **25.08.1999**
(21) Anmeldenummer: 99102407.6
(22) Anmeldetag: 08.02.1999
(51) Int. Cl.: H02G 3/08

(54) **Installationseinrichtung**

(30) Priorität: 19.02.1998 DE 29802942 U
(71) Anmelder: SIEMENS AKTIENGESELLSCHAFT, 80333 München (DE)
(72) Erfinder: Kristen, Winfried, Dr., 68542 Hettesheim (DE)

(57) **Zusammenfassung**

Installationseinrichtung als Aktor eines Bussystems der Gebäudesystemtechnik, als Schaltaktor oder Steuerteil eines Schalters, Tasters oder einer Steckdose oder ähnlichem, bei der ein Einbauteil (1) in einer Einbaudose (2) der Installationstechnik anordbar ist, wobei im Bedarfsfall das Einbauteil von einer Bedienoberfläche aus bedienbar ist. Es ist vorgesehen, daß das Einbauteil (1) mit einer Aussparung oder mit einem Durchbruch (3), geeignet zum Einlegen bzw. Hindurchführen einer Betriebsspannungsleitung (4), versehen ist und daß Anschlußelemente (5) für Betriebsspannungsleiter (6) auf einer ersten Seite und Anschlußelemente (7) für Informationsspannungsleiter (8) auf einer gegenüberliegenden Seite angeordnet sind.

## Beschreibung

Die Erfindung bezieht sich auf eine Installationseinrichtung als Aktor eines Bussystems der Gebäudesystemtechnik, Schaltaktor oder Steuerteil eines Bussystems, Tasters oder einer Steckdose oder ähnlichem, bei der ein Einbauteil in einer Einbaudose der Installationstechnik anordbar ist, im einzelnen nach Gattungsbegriff von Anspruch 1. Im Bedarfsfall ist das Einbauteil von einer Bedienoberfläche aus bedienbar.

Bei einem Aktor oder einen geschilderten ähnlichen Bauteil für ein Bussystem sind einerseits Busleiter anzuschließen und andererseits Betriebsspannungsleiter eines Installationssystems. Beim Bus der European Installation Bus Association, beim Bus "EIB", werden zwar über ein verdrilltes Adernpaar sowohl Informationen als auch die Energie für die Bordnetzversorgung von Teilnehmerstationen übertragen, die Energieleiter für Betriebsspannung anzuschließender Verbraucher sind jedoch gesondert zu führen. An einem Aktor oder dergleichen sind also nach nationalen und internationalen Bestimmungen für das Errichten von Starkstromanlagen die Leiter für 24 Volt Gleichspannung oder allgemein für "Safety Extra Low Voltage" von den Leitern der 230/400 Volt Wechselspannung sicher zu trennen. Die Mantelisolation von Busleitung und Energieleitung sind für 4 kV Prüfspannung auszulegen. Nach Entfernen der Mantelisolation müssen entsprechende Abstände zwischen den Leitern der Busleitung und den Leitern der Energieleitung eingehalten werden. In einer Einbaudose für Unterputz-Montage mit in der Regel einer Tiefe von 60 mm ist die sichere Isolation zwischen anzuschließenden Energieleitern und Busleitern problematisch.

Der Erfindung liegt die Aufgabe zugrunde, eine Installationseinrichtung zu entwickeln, bei der die Isolation zwischen Leitern für "Safety Extra Low Voltage" und Energieleitern auch auf dem engen Raum, der in einer Einbaudose zur Verfügung steht, gewährleistet ist.

Die Lösung der geschilderten Aufgabe erfolgt durch eine Installationseinrichtung nach Anspruch 1. Hierbei ist das Einbauteil mit einer Aussparung bzw. mit einem Durchbruch versehen, durch die ein Betriebsspannungsleiter hindurchgeführt werden kann. Die Anschlußelemente für Betriebsleiter sind auf einer ersten Seite und die Anschlußelemente für Informationsleiter auf einer gegenüberliegenden Seite angeordnet. Hierdurch läßt sich ein ausreichender Sicherheitsabstand einhalten. Unter Betriebsspannungsleitern werden hier Energieleiter für Verbraucher eines Installationssystems verstanden. Unter Informationsspannungsleitern sollen hier solche für "Safety Extra Low Voltage" verstanden werden, also beispielsweise für 24 V. Hierunter werden also auch die Leiter des EIB-Busses verstanden, die außer der Information auch Gleichspannung zur Versorgung der Elektronik in Teilnehmerstationen führen.

Das Einbauteil ist geeignet zum Einlegen bzw. Hindurchführen einer Betriebsspannungsleitung und die Anschlußelemente für Betriebsspannungsleiter sind auf einer ersten Seite und Anschlußelemente für Informationsleiter auf einer gegenüberliegenden Seite angeordnet. Die Betriebsspannungsleitung kann in die Aussparung oder den Durchbruch eingelegt werden und ihre Leiter auf dieser so erreichten ersten Seite angeschlossen werden. Die Informationsspannungsleiter auf einer gegenüberliegenden Seite sind durch den Isolationsmantel der Betriebsspannungsleitung gegen die Informationsleiter und ihrer Anschlußelemente isoliert.

Insbesondere kann das Einbauteil für eine Einbaulage mehr oder weniger gleichgerichtet zur Bedienoberfläche ausgeführt sein. Hierbei kann die Betriebsspannungsleitung von unten durch den Durchbruch im Einbauteil hindurchgeführt werden, so daß nur die Betriebsspannungsleiter Anschlußelemente auf der Oberseite vorzusehen sind. Der Einbauraum unter dem Einbauteil bildet einen vorschriftengerechten Anschlußraum für Informationsspannungsleiter, so daß Anschlußelemente hierfür an der Unterseite des Einbauteils dann vorzusehen sind.

Insbesondere kann das Einbauteil im wesentlichen scheibenförmig ausgeführt sein und mit einem Durchbruch in den Abmessungen einer Betriebsspannungsleitung versehen sein.

Die Erfindung soll nun anhand eines in der Zeichnung grob schematisch wiedergegebenen Ausführungsbeispiels näher erläutert werden:
- In Figur 1: ist eine Installationseinrichtung mit einem Einbauteil mit zylindrischen Durchbruch wiedergegeben, wobei der Durchbruch so weit bemessen ist, daß eine anzuschließende Betriebsspannungsleitung hindurchgeführt werden kann.
- In Figur 2: ist die Installationseinrichtung von Figur 1 nach Art einer Seitenansicht veranschaulicht.
- In Figur 3: ist in der Darstellungsart nach Figur 1 ein Einbauteil mit seitlicher Aussparung veranschaulicht.

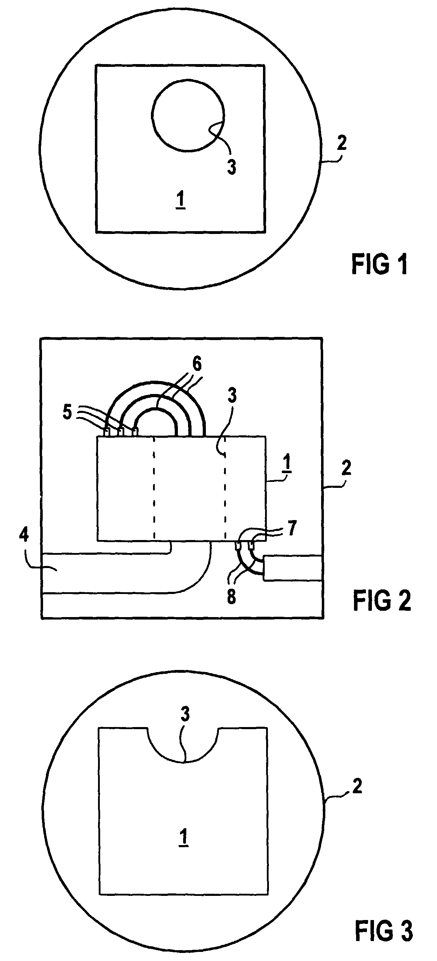

Die Installationseinrichtung nach Figur 1 kann als Aktor eines Bussystems der Gebäudesystemtechnik verstanden werden. Ein entsprechendes Einbauteil 1 ist in einer Einbaudose 2 der Installationstechnik anordenbar. Im Bedarfsfall kann das Einbauteil von einer Bedienoberfläche aus, in der Zeichenebene, bedienbar sein. Das Einbauteil 1 ist im Ausführungsbeispiel mit einem Durchbruch versehen, der geeignet ist eine Betriebsspannungsleitung 4 hindurchzuführen, wie es in Figur 2 veranschaulicht ist. Anschlußelemente 5 für Betriebsspannungsleiter 6 sind auf einer ersten Seite des Einbauteils 1 ausgebildet. Anschlußelemente 7 für Informationsspannungsleiter 8 sind auf einer gegenüberliegenden Seite angeordnet. Das Einbauteil 1 ist im Ausführungsbeispiel für eine Einbaulage im wesentlichen gleichgerichtet zur Bedienoberfläche, also der Zeichenebene bei Figur 1 bzw. senkrecht zur Zeichenebene nach Figur 2, ausgeführt. Das Einbauteil 1 ist im wesentlichen scheibenförmig ausgeführt und mit einem Durchbruch bzw. in einer Aussparung in den Abmessungen einer Betriebsspannungsleitung 4 versehen. Ein Einbauteil mit seitlicher Aussparung 3 ist in Figur 3 wiedergegeben.

## Patentansprüche

1. Installationseinrichtung als Aktor eines Bussystems der Gebäudesystemtechnik, als Schaltaktor oder Steuerteil eines Schalters, Tasters oder einer Steckdose oder ähnlichem, bei der ein Einbauteil (1) in einer Einbaudose (2) der Installationstechnik anordbar ist, wobei im Bedarfsfall das Einbauteil von einer Bedienoberfläche aus bedienbar ist,
**dadurch gekennzeichnet,** daß
das Einbauteil (1) mit einer Aussparung bzw. mit einem Durchbruch (3), geeignet zum Einlegen bzw. Hindurchführen einer Betriebsspannungsleitung (4), versehen ist und daß Anschlußelemente (5) für Betriebsspannungsleiter (6) auf einer ersten Seite und Aschlußelemente (7) für Informationsspannungsleiter (8) auf einer gegenüberliegenden Seite angeordnet sind.

2. Installationseinrichtung nach Anspruch 1,
**dadurch gekennzeichnet,** daß
das Einbauteil (1) für eine Einbaulage in etwa gleichgerichtet zur Bedienoberfläche ausgeführt ist.

3. Installationseinrichtung nach Anspruch 2,
**dadurch gekennzeichnet,** daß
das Einbauteil (1) im wesentlichen scheibenförmig ausgeführt und mit einer Aussparung bzw. mit einem Durchbruch (3) in den Abmessungen einer Betriebsspannungsleitung (4) versehen ist.

4. Installationseinrichtung nach Anspruch 1 bis 3,
**dadurch gekennzeichnet,** daß
der Durchbruch (3) entweder zylindrisch durch das Einbauteil (1) geführt ist oder als halbkreisförmige Aussparung an einer Seite des Einbauteils gemäß Figur 3 ausgeführt ist.

5. Installationseinrichtung nach einem der Ansprüche 1 bis 3,
**dadurch gekennzeichnet,** daß
die Aussparung (3) mit halbkreisförmigen Profil an einer Seite des Einbauteils (1) ausgebildet ist.
